# EUROPÄISCHE PATENTANMELDUNG

(11) **EP 0 972 475 A2**
(43) Veröffentlichungstag der Anmeldung: **19.01.2000**
(21) Anmeldenummer: 99106954.3
(22) Anmeldetag: 08.04.1999
(51) Int. Cl.: A47G 1/06

(54) **Beleuchteter Bilderhalter**

(30) Priorität: 06.07.1998 DE 19830151
(71) Anmelder: Becker & Hach GmbH & Co.KG, 37251 Eschwege (DE)
(72) Erfinder: Becker, Dirk, Becker & Hach GmbH & Co.KG, 37251 Eschwege (DE)
(74) Vertreter: Grünecker, Kinkeldey, Stockmair & Schwanhäusser Anwaltssozietät

(57) **Zusammenfassung**

Beleuchteter Bilderhalter (1), wobei zwischen Bild (6) und Rückseite der Frontplatte (2) eine durchsichtige Adhäsionsschicht angeordnet ist, durch die das Bild (6) auswechselbar an der Frontplatte (2) gehalten ist und die als Lichtleiterschicht mit einem Brechungsindex ausgestaltet ist, der größer ist als der Brechungsindex von Luft, wodurch das Licht der Lichtquelle (4) von der Frontplatte (2) durch die Adhäsionsschicht auf die Bildoberfläche geleitet ist und diese beleuchtet.

Diese Ausgestaltung hat den Vorteil, daß die Adhäsionsschicht sowohl als Befestigung des Bildes als auch als Teil der Beleuchtung dient, aufgrund dessen das Bild vollständig ausgeleuchtet wird.

Die erfindungsgemäß beleuchteten Bilderhalter eignen sich besonders zum Aufstellen von auf Papier gedruckten Bildermotiven.

## Beschreibung

Die Erfindung betrifft einen beleuchteten Bilderhalter zur Darstellung von Bildmotiven mit einer durchsichtigen Frontplatte, durch die hindurch ein Bild einsehbar ist, und einer an einer Seitenfläche der Frontplatte angeordneten Lichtquelle, deren Licht durch die Seitenfläche in die Frontplatte geleitet ist.

Eine seitlich beleuchtete Vorrichtung zur Darstellung eines Bildgegenstandes ist beispielsweise aus der DE-82 29 147 U1 bekannt. Bei dieser Vorrichtung wird das Licht durch eine Seitenfläche in eine durchsichtige Frontplatte eingespeist und durch Totalreflexion in der Frontplatte geleitet. In die Rück- und/oder Vorderseite der Frontplatte ist ein Bildmotiv eingraviert. An den Eingravierungen wird das Licht gebrochen, was bei Betrachtung durch die Frontplatte zu einer plastischen und leuchtenden Darstellung des Bildmotivs führt.

Allerdings ist man bei dieser Vorrichtung zur Darstellung eines Bildgegenstandes an das eingravierte Bildmotiv ein für alle Mal gebunden. Ein Wechsel des Bildmotivs ist nur durch Erwerb einer anderen Vorrichtung oder durch eine aufwendige Überarbeitung der Frontplatte möglich.

Der Erfindung liegt daher die Aufgabe zugrunde, einen beleuchteten Bilderhalter zu schaffen, bei dem die Bildmotive auswechselbar sind.

Zwar sind Bilderhalter, bei denen die Bilder auswechselbar in einem Rahmen aufgenommen sind, an sich bekannt, doch ist zum Auswechseln der Bilder der Bilderhalter meist auseinander zu bauen. Ein Bilderwechsel ist also recht kompliziert. Außerdem ist bei diesen bekannten Bilderhaltern eine Beleuchtung des Bildmotivs nicht möglich.

Erfindungsgemäß wird diese Aufgabe für einen beleuchteten Bilderhalter der eingangs genannten Art dadurch gelöst, daß zwischen Bild und Rückseite der Frontplatte eine durchsichtige Adhäsionsschicht angeordnet ist, durch die das Bild auswechselbar an der Frontplatte gehalten ist und die als Lichtleiterschicht mit einem Brechungsindex ausgestaltet ist, der größer ist als der Brechungsindex von Luft, wodurch das Licht der Lichtquelle von der Frontplatte durch die Adhäsionsschicht auf die Bildoberfläche geleitet ist und das Bild beleuchtet.

Diese Erfindung ist einfach und hat den Vorteil, daß die Bilder nunmehr auswechselbar sind, indem sie von der Adhäsionsschicht, die gleichzeitig als Befestigung der Bilder am Bilderhalter dient, abgezogen werden. Damit können inbesondere auf Papier gedruckte Bildmotive wie Photos, Poster sowie Zeitungs- oder Zeitschriftenausschnitte am Bilderhalter befestigt werden.

Bei beleuchteten Bilderhaltern dagegen war bislang das Problem der vollständigen Ausleuchtung des an der Rückseite der Frontplatte anliegenden Bildes noch nicht gelöst. Das Licht wird nämlich nicht von der Rückseite der Frontplatte auf das Bild geleitet, wenn das Bild nur an der Frontseite aufliegt.

Überraschenderweise hat sich nun ergeben, daß die Adhäsionsschicht auch als Lichtleiterschicht ausgebildet werden kann, wenn deren Brechungsindex größer ist als der Brechungsindex von Luft. In diesem Fall tritt das in der Frontplatte geleitete Licht durch die Rückseite aus, fällt auf das Photo und leuchtet dieses vollständig aus.

Damit erfüllt die Adhäsionsschicht eine Doppelfunktion als Befestigung des Bildes und als Lichtleiter. Gleichzeitig ist die Adhäsionsschicht, die üblicherweise als eine dünne, meist pastöse Schicht an der Rückseite der Frontplatte angebracht ist, kostengünstig aufzutragen und verursacht nur geringe Materialkosten, die erheblich unter den Materialkosten anderer Haltevorrichtungen und Lichtleitvorrichtungen liegen. Ein Bilderwechsel ist möglich, ohne daß aufwendige Befestigungs- und Haltevorrichtungen notwendig sind.

Um zu verhindern, daß Licht aus den Abschnitten austritt, in denen kein Licht in die Frontplatte eingespeist wird, kann der beleuchtete Bilderhalter an diesen Abschnitten verspiegelt sein. Derartige Verspiegelungen können durch Auftragen einer Metallschicht, durch Aufkleben von Folien oder durch Beschichtung mit Lacken oder anderen aushärtenden Stoffen erfolgen.

Damit möglichst viel Licht von der Frontplatte auf die Bildoberfläche fällt, kann die Adhäsionsschicht vorteilhaft einen Brechungsindex aufweisen, der in etwa dem Brechungsindex des Werkstoffes der Frontplatte entspricht. Je mehr diese beiden Brechungsindizes einander angeglichen sind, umso mehr Licht wird durch die Adhäsionsschicht auf das Bild geleitet. Dies heißt, daß die Adhäsionsschicht einen Brechungsindex aufweisen kann, der im Bereich der gängigen Gläser liegt, beispielsweise also zwischen 1,3 und 2,5, vorzugsweise zwischen 1,3 und 1,7. Eine gute Lichtleitung von der Frontplatte zur Bildoberfläche kann auch dann erreicht werden, wenn das Verhältnis des Brechungsindizes von Frontplatte und Adhäsionsschicht im Bereich von 0,8 bis 1,2, vorzugsweise zwischen 0,9 und 1,1 liegt.

Die Adhäsionsschicht sollte vorteilhaft einen zusammenhängenden Abschnitt der Rückseite der Frontplatte lückenlos bedecken, so daß die gesamte Oberfläche des Bildes lückenlos beleuchtet wird. Dies ist u.a. für einen überzeugenden ästhetischen Eindruck wichtig, da ansonsten dunkle Flecken am Bild entstehen. Eine ausreichende Dicke der Adhäsionsschicht kann zwischen 0,1 mm und 1 mm betragen, vorzugsweise zwischen 0,3 mm und 0,7 mm. Die Dicke der Adhäsionsschicht sollte so bemessen sein, daß durch Anpressen des Bildes in eine zu dünn aufgetragene Adhäsionsschicht diese nicht zur Seite gedrückt werden kann, wodurch eine Lücke entstehen würde, in der kein Licht mehr auf die Bildoberfläche geleitet ist. Zum anderen sollte die Adhäsionsschicht nicht so dick sein, daß beim Abziehen des Bildes von der Frontplatte Teile der Adhäsionsschicht am Bild kleben bleiben und die Adhäsionsschicht zu fließen anfängt.

Um einer Gefahr der Verschmutzung der Rückseite der Frontplatte bzw. den Abschnitten der Adhäsionsschicht, die nicht von einem Bild bedeckt sind, vorzubeugen, kann die Adhäsionsschicht auf einem Abschnitt der Rückseite der Frontplatte aufgetragen sein, dessen Fläche und/oder Form im wesentlichen der Fläche und/oder Form des Bildes entspricht. Auch können die Abmessungen der Rückseite der Frontplatte in etwa den Abmessungen der Bildoberfläche entsprechen.

Eine gute Betrachtung der Bildoberfläche durch Frontplatte und Adhäsionsschicht ist in einer weiteren vorteilhaften Ausgestaltung dann gewährleistet, wenn die Frontplatte aus einem klarsichtigen Werkstoff, wie beispielsweise Glas oder Acrylglas hergestellt ist.

Die Adhäsionsschicht kann einer weiteren Ausgestaltung aus einem Haftklebstoff gebildet sein, der bei Raumtemperatur permanent klebrig und klebfähig ist sowie eine geringe Substratspezifität aufweist. Derartige Haftklebstoffe bleiben auch beim Abziehen des Bildes an der Frontplatte kleben und weisen sehr gute Hafteigenschaften auf beliebigen Bildoberflächen auf Damit können in dem derart ausgestalteten Bilderhalter beliebige Arten von Bildern aufgenommen werden. Die Haftklebstoffe können vorteilhaft ein Basispolymer umfassen, welches unter Polyacrylaten, Polyestern, Polychloroprenen, Polyisobutenen, Polyvinyletheren und Polyurethanen ausgewählt ist und/oder Mischungen davon umfaßt. Zum Einstellen des Brechungsindizes des Haftklebstoffs sowie der Klebfähigkeit und Klebrigkeit können dem Haftklebstoff Zusätze wie beispielsweise Weichmacher und/oder Harze und/oder Antioxidantien zugemischt werden. Auf diese Weise kann die Adhäsionsschicht der Frontplatte sowie den unterschiedlichen Verwendungszwecken, wie sie sich beispielsweise bei verschiedenen Größen des Bilderhalters ergeben, angepaßt werden.

Die Lichtquelle kann vorteilhaft als eine Glühlampe und/oder eine Gasentladungslampe und/oder eine Leuchtiode ausgestaltet sein. Derartige Lichtquellen sind im Handel erhältlich, kostengünstig einzubauen und auszuwechseln.

Auch können in einer weiteren vorteilhaften Ausgestaltung zumindest die Seitenflächen der Frontplatte mit einem Rahmen umgeben sein. Dieser Rahmen schützt die Kanten und Seitenflächen der Frontplatte vor Beschädigung und dient auch ästhetischen Zwecken, indem er zu einem ansprechenderen Design führen kann. Dabei kann der Bilderhalter vorteilhaft so ausgestaltet sein, daß das Leuchtmittel im Rahmen integriert ist. Dies ergibt einerseits einen sehr einfachen Aufbau, bei dem auf zusätzliche Vorrichtungen zur Befestigung der Leuchtquelle verzichtet werden kann, andererseits erhält man auf diese Weise ein ästhetisch gelungenes Aussehen, bei dem das Leuchtmittel von außen nicht wahrnehmbar ist. Außerdem lassen sich so die Abmessungen des Bilderhalters verringern.

Eine zusätzliche Sicherung des durch die Adhäsionsschicht gehaltenen und durch die Lichtleiterschicht beleuchteten Bildes gegen Herabfallen und abschnittsweises Lösen von der Adhäsionsschicht kann erreicht werden, wenn zumindest ein Federelement mit einem Niederhalter und einem Gegenhalter vorgesehen ist, wobei das Bild durch den Niederhalter in Richtung der Adhäsionsschicht gedrückt ist und der Gegenhalter sich an der Frontplatte zumindest mittelbar abstützt. Ein flächiges Anpressen des Bildes an die Adhäsionsschicht kann auch durch einen Bilderhalter erreicht werden, bei dem eine Rückwand zum gleichmäßigen Andrücken des Bildes an die Adhäsionsschicht zwischen Federelement und Bild angeordnet ist.

Im folgenden werden Aufbau und Funktion zweier Ausführungsbeispiele des erfindungsgemäßen, beleuchteten Bilderhalters beispielhaft erläutert.

Es zeigen:
- Fig. 1: eine perspektivische Ansicht eines ersten Ausführungsbeispiels des erfindungsgemäßen beleuchteten Bilderhalters:
- Fig. 2: einen abschnittsweisen Querschnitt durch das Ausführungsbeispiel der Fig. 1 durch eine Frontplatte, Adhäsionsschicht und ein Bild;
- Fig. 3: einen Horizontalschnitt durch ein zweites Ausführungsbeispiel des erfindungsgemäßen beleuchteten Bilderhalters.

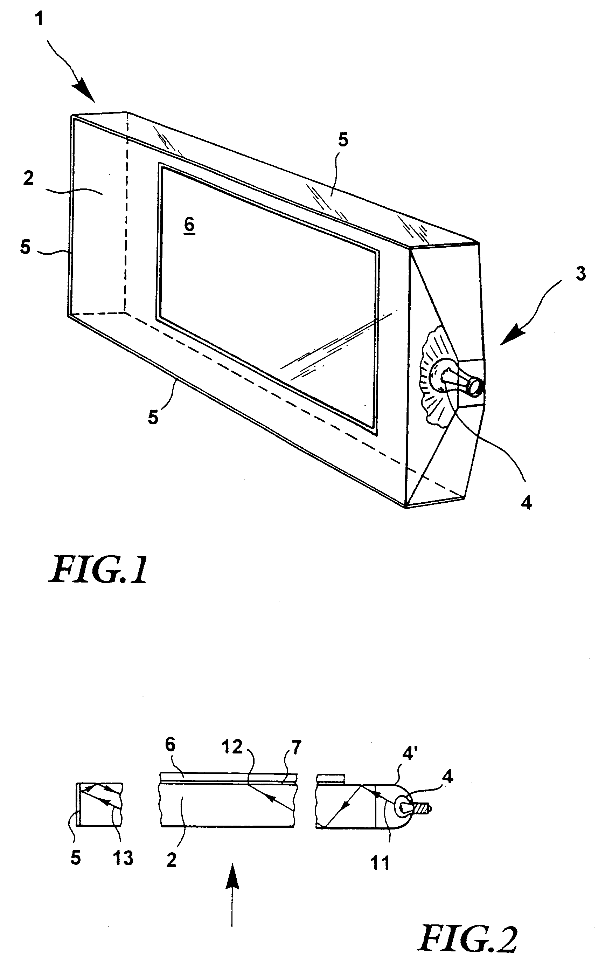

Zunächst wird der Aufbau des ersten Ausführungsbeispiels des erfindungsgemäßen Bilderhalters anhand der Fig. 1 erläutert:

Fig. 1 zeigt den Bilderhalter in einer Ansicht von links vorne oben. Der Bilderhalter weist eine Glasplatte 2 auf. An der linken Seitenfläche befindet sich eine Leuchtquelle 3, die teilweise aufgebrochen ist, um den Blick auf das Leuchtmittel 4, in diesem Fall eine Glühbirne, freizugeben. Das Leuchtmittel ist lichtdicht an der linken Seitenfläche befestigt, so daß Licht nur in die Seitenfläche eintreten kann. Um eine gute Lichtausbeute zu erzielen, ist es sinnvoll, das Leuchtmittel innen mit einem Reflektor zu versehen. In der Leuchtquelle 3 befinden sich weiterhin Energieversorgungseinrichtungen, beispielsweise Batterien, sowie Steuerelemente, beispielsweise Ein- und Ausschalter, die in Fig. 1 der Einfachheit halber nicht dargestellt sind.

Die anderen Seitenflächen, durch die kein Licht in die Frontplatte eingeleitet wird, sind mit einer spiegelnden Lackschicht 5 versehen, so daß durch diese Seitenflächen kein Licht austreten kann.

Ist das Leuchtmittel 3 so klein ausgestaltet, daß es eine Seitenfläche der Frontplatte 2 nicht vollständig bedeckt, so kann auch die Leuchtmittel 3 zugewandte Seitenfläche in dem Bereich verspiegelt sein, in dem kein Licht in die Frontplatte 2 eingeleitet wird bzw. in dem die Seitenfläche nicht vom Leuchtmittel 3 und deren Einrichtungen bedeckt ist.

Durch die verspiegelten Seitenflächen wird das Licht in der Frontplatte 2 gehalten, und kann nur durch Vorder- und Rückseite der Frontplatte austreten.

Die Frontplatte 2 besteht beim ersten Ausführungsbeispiel aus sehr dickem Glas. Die untere Seitenfläche bildet so eine Standfläche, auf der der Bilderhalter selbständig stehend aufgestellt werden kann, ohne umzukippen. Außerdem ist eine derartige dicke Frontplatte aus gestalterischen Gesichtspunkten sinnvoll.

An der Rückseite der Frontplatte 2 ist ein Bild 6 angebracht, dessen mit einem Bildmotiv bedeckte Seite in Richtung Frontplatte zeigt. Das Bild 6 ist so durch die Vorderseite der Frontplatte 2 hindurch einsehbar.

Fig. 2 zeigt einen Horizontalschnitt durch das Ausführungsbeispiel der Fig. 1. Zwischen der Frontplatte 2 und dem Bild 6 ist der Haftkleber aufgetragen, der die Adhäsions- und Lichtleitschicht 7 bildet. Des weiteren ist ein verspiegelter, parabolförmiger Reflektor 4' gezeigt, durch den das Licht verlustfrei in die Seitenfläche einkoppelbar ist.

Der Haftkleber bedeckt lückenlos einen Abschnitt der Rückseite der Frontplatte, der in Form und Fläche dem Bild 6 entspricht. Dadurch sind keine überstehenden Adhäsionsflächen vorhanden, die nach längerer Benutzung eventuell durch Staub oder ähnlichem verschmutzen können. Der Haftkleber ist im ursprünglichen Zustand bandförmig aufgewickelt. Die Dicke des zweiseitig klebenden, fließfähigen Bandes beträgt 1 mm.

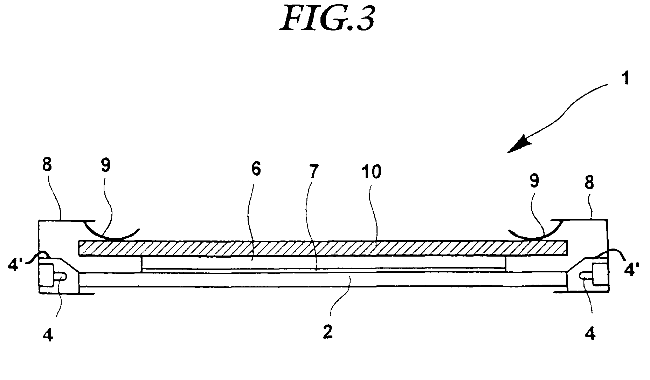

Fig. 3 zeigt das zweite Ausführungsbeispiel des erfindungsgemäßen Bilderhalters in einem Horizontalschnitt. Die dem ersten Ausführungsbeispiel entsprechenden Merkmale sind mit den gleichen Bezugsziffern zu versehen.

Das zweite Ausführungsbeispiel weist einen Rahmen 8 auf, der die Frontplatte 2 an deren Vorderseite und an deren Seitenflächen rahmenartig umgibt. Im Rahmen 8 sind Leuchtmittel 4 montiert. Hier werden Leuchtdioden verwendet, die weißes Licht ausstrahlen. Durch Reflektoren 4' an den beiden sich senkrecht erstreckenden, gegenüberliegenden Seitenflächen wird das Licht in die Frontplatte 2 eingespeist. Wie schon beim ersten Ausführungsbeispiel sind die Abschnitte der Seitenflächen, an denen kein Licht in die Frontplatte 2 eingespeist wird, durch eine Spiegelfolie verspiegelt.

Des weiteren sind am Rahmen 8 Federelemente 9 angebracht. Die klammerartigen Federelemente 9 stützen sich an der einen Seite am Rahmen 8 ab und sind an der anderen Seite mit einem Niederhalter versehen, der gegen einen Abschnitt der Rückwand 10 als Gegenhalter drückt.

In einer Gebrauchsstellung, in der der beleuchtete Bilderhalter üblicherweise verwendet wird, sind die Federelemente 9 elastisch verformt und drücken die Rückwand 10 gleichmäßig gegen die Rückseite des Bildes 6, welches dadurch wiederum in die Adhäsionsschicht 7 gedrückt wird. Das Bild 6 wird so zusätzlich gegen Herabfallen oder unbeachsichtigtes Ablösen gesichert. Gleichzeitig wird durch den Anpressdruck eine gute Verbindung der Bildoberfläche mit der Adhäsionsschicht 7 erreicht, so daß zum einen eine gute Lichtleitung durch die Adhäsionsschicht zur Bildoberfläche erreicht wird und zum anderen Lufteinschlüsse und dergleichen vermieden werden. Das Bild 6 wird gleichmäßig ausgeleuchtet. Am Rahmen 8 können nicht gezeigte Stützen oder Haken/Ösen vorgesehen sein, mit denen der beleuchtete Bilderhalter aufstellbar bzw. aufhängbar ist. Im Rahmen 8 sind des weiteren von außen unsichtbare Energieversorgungseinrichtungen und Steuereinrichtungen für die Leuchtmittel 4 vorgesehen. Die Frontscheibe 2 ist klarsichtig und besteht aus Acrylglas.

Der Rahmen kann aus ästhetisch anspruchsvollen und widerstandsfähigen Materialien wie Aluminium, Titan oder dergleichen, gefertigt sein, oder beschichtet sein, beispielsweise eloxiert, um so auch nach langem Gebrauch sein Aussehen zu wahren und nicht zu oxidieren.

Im folgenden wird anhand der Fig. 2 kurz die Funktionsweise des erfindungsgemäßen beleuchteten Bilderhalters erläutert:

In der Fig. 2 ist ein Lichtstrahl 11 gezeigt, der das Leuchtmittel 4 in einem Winkel verläßt, in dem er durch die Seitenfläche in die Frontplatte 2 eintreten kann, ohne an der Grenzfläche reflektiert zu werden. An der Rückseite der Frontplatte, die nicht mit einer Adhäsions- und Lichtleiterschicht versehen ist, und an deren Vorderseite wird der Lichtstrahl 11 durch Totalreflexion reflektiert, so daß er die Frontplatte 2 nicht verlassen kann.

Trifft der Lichtstrahl nun auf die Rückseite der Frontplatte in einem Bereich, der mit einer Adhäsions- und Lichtleiterschicht 7 versehen ist, so wird er nicht an der Rückfläche reflektiert, sondern durch die Adhäsions- und Lichtleiterschicht 7 an die Bildoberfläche geleitet, wie dies durch die Linie 12 angedeutet ist. Dazu wird der Haftkleber, der die Adhäsionsschicht 7 bildet, durch Zusätze derart in seinem Brechungsindex dem Brechungsindex der Frontplatte 2 angepaßt, daß das Licht auch bei hohen Einfallswinkeln auf die Grenzfläche zwischen Adhäsions- und Lichtleiterschicht 7 und Frontplatte 2 zur Bildoberfläche weitergeleitet und die Bildoberfläche gut ausgeleuchtet wird.

Je näher die Brechungsindizes von Adhäsions- und Lichtleiterschicht 7 und der Frontplatte 2 einander angeglichen sind, d.h., je näher die Brechzahl der beiden Werkstoffe an 1 liegt, um so mehr Licht kann durch die Adhäsions- und Lichtleiterschicht 7 auf die Bildoberfläche geleitet werden. Für eine gleichmäßige Ausleuchtung des Bildmotivs sollte die Adhäsions- und Lichtleiterschicht 7 allerdings gleichmäßig auf die Rückseite der Frontplatte aufgetragen sein, so daß keine Luftblasen und Einschlüsse entstehen, durch die das Licht gebrochen wird.

Am Beispiel des Lichtstrahles 14 ist gezeigt, daß an den verspiegelten Seitenfächen 5 das Licht ebenfalls vollständig zurück in die Frontplatte 2 reflektiert wird.

Um eine Verschmutzung der Rückseite der Frontplatte 2 zu verhindern, ist die Adhäsions- und Lichtleiterschicht 7 nur im Bereich des Bildes 6 lückenlos aufgetragen. Die Fläche und Form dieser Auftragung kann sich dabei an den gängigen Bildformaten für Photographien orientieren. Auch können die Abmessungen des Bilderhalters oder der Frontplatte den Abmessungen der gängigen Photoformate entsprechen. In diesem Fall kann die gesamte Rückfläche der Frontplatte 2 mit einer Adhäsions- und Lichtleiterschicht versehen sein.

## Patentansprüche

1. Beleuchteter Bilderhalter zur Darstellung von Bildmotiven, mit einer durchsichtigen Frontplatte, durch die hindurch ein Bild einsehbar ist, und einer an einer Seitenfläche der Frontplatte angeordneten Lichtquelle, deren Licht durch die Seitenfläche in die Frontplatte geleitet ist, **dadurch gekennzeichnet, daß** zwischen Bild (6) und Rückseite der Frontplatte (2) eine durchsichtige Adhäsionsschicht (7) angeordnet ist, durch die das Bild (6) auswechselbar an der Frontplatte (2) gehalten ist und die als Lichtleiterschicht (7) mit einem Brechungsindex ausgestaltet ist, der größer ist als der Brechungsindex von Luft, wodurch das Licht der Lichtquelle (4) von der Frontplatte (2) durch die Adhäsionsschicht (7) auf die Bildoberfläche geleitet ist und das Bild beleuchtet.

2. Beleuchteter Bilderhalter nach Anspruch 1, **dadurch gekennzeichnet, daß** die Seitenflächen an den Abschnitten (5), an denen kein Licht der Lichtquelle (4) in die Frontplatte (2) eingeleitet ist, verspiegelt sind.

3. Beleuchteter Bilderhalter nach einem der obengenannten Ansprüche, **dadurch gekennzeichnet, daß** die Adhäsionsschicht (7) einen Brechungsindex aufweist, der in etwa dem Brechungsindex des Werkstoffes der Frontplatte (2) entspricht.

4. Beleuchteter Bilderhalter nach einem der obengenannten Ansprüche, **dadurch gekennzeichnet, daß** die Adhäsionsschicht (7) einen Brechungsindex zwischen 1,3 und 2,5, vorzugsweise zwischen 1,3 und 1,7, aufweist.

5. Beleuchteter Bilderhalter nach einem der obengenannten Ansprüche, **dadurch gekennzeichnet, daß** das Verhältnis des Brechungsindizes von Frontplatte (2) und Adhäsionsschicht (7) im Bereich von 0,8 bis 1,2, vorzugsweise zwischen 0,9 und 1,1, liegt.

6. Beleuchteter Bilderhalter nach einem der obengenannten Ansprüche, **dadurch gekennzeichnet, daß** die Adhäsionsschicht (7) einen zusammenhängenden Abschnitt der Rückseite der Frontplatte (2) lückenlos bedeckt.

7. Beleuchteter Bilderhalter nach einem der obengenannten Ansprüche, **dadurch gekennzeichnet, daß** die Dicke der Adhäsionsschicht (7) zwischen 0,1 mm und 1 mm, vorzugsweise zwischen 0,3 mm und 0,7 mm beträgt.

8. Beleuchteter Bilderhalter nach einem der obengenannten Ansprüche, **dadurch gekennzeichnet, daß** die Adhäsionsschicht (7) auf einem Abschnitt der Rückseite der Frontplatte (2) aufgetragen ist, dessen Fläche und/oder Form im wesentlichen der Fläche und/oder Form des Bildes (6) entspricht.

9. Beleuchteter Bilderhalter nach einem der obengenannten Ansprüche, **dadurch gekennzeichnet, daß** die Abmessungen der Rückseite der Frontplatte (2) in etwa den Abmessungen der Bildoberfläche (6) entsprechen.

10. Beleuchteter Bilderhalter nach einem der Ansprüche 1 und 2, **dadurch gekennzeichnet, daß** die Frontplatte (2) aus einem klarsichtigen Werkstoff, wie beispielsweise Glas oder Acrylglas, hergestellt ist.

11. Beleuchteter Bilderhalter nach einem der obengenannten Ansprüche, **dadurch gekennzeichnet, daß** die Adhäsionsschicht (7) aus einem Haftklebstoff gebildet ist, der bei Raumtemperatur permanent klebrig und klebfähig ist sowie eine geringe Substratspezifität aufweist.

12. Beleuchteter Bilderhalter nach einem der obengenannten Ansprüche, **dadurch gekennzeichnet, daß** der Haftklebstoff ein Basispolymer umfaßt, welches unter Polyacrylaten, Polyestern, Polychloroprenen, Polyisobutenen, Plyvinyletheren und Polyurethanen ausgewählt ist und/oder Mischungen davon umfaßt.

13. Beleuchteter Bilderhalter nach einem der obengenannten Ansprüche, **dadurch gekennzeichnet, daß** zum Einstellen des Brechungsindizes des Haftklebstoffs dem Haftklebstoff Zusätze wie beispielsweise Weichmacher und/oder Harze und/oder Antioxidantien zugemischt sind.

14. Beleuchteter Bilderhalter nach einem der obengenannten Ansprüche, **dadurch gekennzeichnet, daß** die Lichtquelle (4) eine Glühlampe und/oder eine Gasentladungslampe und/oder eine Leuchtdiode ist.

15. Beleuchteter Bilderhalter nach einem der obengenannten Ansprüche, **dadurch gekennzeichnet, daß** zumindest die Seitenflächen der Frontplatte (2) mit einem Rahmen (8) umgeben sind.

16. Beleuchteter Bilderhalter nach einem der obengenannten Ansprüche, **dadurch gekennzeichnet, daß** Das Leuchtmittel (4) im Rahmen (8) integriert ist.

17. Beleuchteter Bilderhalter nach einem der obengenannten Ansprüche, **dadurch** g**ekennzeichnet, daß** zumindest ein Federelement (9) mit einem Niederhalter und einem Gegenhalter vorgesehen ist, wobei durch den Niederhalter das Bild (6) in Richtung der Adhäsionsschicht (7) gedrückt ist und der Gegenhalter sich an der Frontplatte (2) zumindest mittelbar abstützt.

18. Beleuchteter Bilderhalter nach einem der obengenannten Ansprüche, **dadurch gekennzeichnet, daß** eine Rückwand (10) zum gleichmäßigen Andrücken des Bildes an die Adhäsionsschicht zwischen Federelement (9) und Bild angeordnet ist.
